# EUROPEAN PATENT APPLICATION

(11) **EP 2 902 954 A1**
(43) Date of publication of application: **05.08.2015**
(21) Application number: 14153511.2
(22) Date of filing: 31.01.2014
(51) Int. Cl.: G06Q 30/02

(54) **Method and system for secure and flexible providing of customer reward data**

(71) Applicant: Jubb, Brian, 132 48 Saltsjö Boo (SE); Quanne, Dean, Sliema (MT)
(72) Inventor: Jubb, Brian, 132 48 Saltsjö Boo (SE); Quanne, Dean, Sliema (MT)

(57) **Abstract**

A method in a first server for secure and flexible providing of customer reward data, the method comprising generating a first set of reward ticket data values, wherein generating said first set further comprises determine each reward ticket data value as either a reward generating value or a non-reward generating value; obtaining a predefined ordered second set of instances of reward ticket data value bins configured to comprise reward ticket data values and descriptive metadata; assigning exclusive subsets of said first set of reward ticket data values to said second set of instances of reward ticket data value bins based on said descriptive metadata; receiving a request for delivery of a third set of reward ticket data values from a second server, wherein said request for delivery of a third set of ticket data values comprises a second parameter set; selecting said third set of reward ticket data values from said second set of instances of reward ticket data value bins based on said second parameter set; modifying reward ticket redemption status values comprised in said reward ticket data values of said selected third set of reward ticket data values to indicate that said selected third set of ticket data values have been redeemed; sending a response for delivery to said second server, wherein said response for delivery is comprising said selected third set of ticket data values.

## Description

### TECHNICAL FIELD

Generally, embodiments of the invention relate to the technical field of providing customer reward data intended for an end-user, in particular secure and flexible providing of customer reward data based on reward request parameters and descriptive metadata, e.g. by evaluating request parameters and descriptive metadata based on a reward issuance criteria.

### BACKGROUND

Various operators or providers of services or goods, such as internet gaming providers or internet shop merchants, use digital communication, e.g. webpages over the internet, to interact with their end users or persons purchasing services or goods. For various reasons such an operator may want to provide customer or end-user rewards, e.g. to increase the number of end-users, to promote introduction of new products, to encourage repeat customers or to reduce excess stock of products etc. As the operators or providers of services or goods communicate with their end-users over unsecure networks, such as the internet, using digital communication, there is a need to provide rewards electronically in a secure fashion, e.g. to ensure that a delivered reward is valid, can't be copied and can't be forged. Another need is to be able to provide rewards in a flexible fashion, e.g. to limit the time during which time a reward is valid, to be able to provide end-user unique or adapted rewards, to be able to provide web page context based adapted rewards and to dynamically adapt reward issuance criteria based on live data, such as sales statistics, weather forecasts or product stock statistics. An example of context based adapted rewards could be to offer an end-user currently in the web page context of completing a purchase, e.g. paying for goods at an internet merchant or transferring funds to an internet gaming operator, to win the amount back, i.e. a reward in the form of an electronic game such as a lottery ticket, a scratch card, a slot machine spin or any other form of electronic game upon which result a reward generating value or a non-reward generating value may be determined.

In the latter example issuing a reward in the form of an electronic lottery ticket may, in some states such as Sweden, require a gaming license, whereby there is a need to physically and regulatory separate operators or providers of services or goods and a provider of rewards, e.g. by owning and operating different servers.

Conventional systems have addressed the problem of providing rewards, e.g. document EP1 460 787 B1 directed to a technique applied to an audience that is listening to and/or watching a program broadcast from a program signal source as it is being performed by reproduction equipment and, more particularly, to reward persons who meet certain reward issuance criteria when they have chosen to be members of that audience by tuning in to the program signal source which is offering the reward.

Document US8632411 B1 is directed towards systems and methods for exchanging virtual rewards for computing resources. Exemplary methods may include receiving access to a portion of computing resources of an end user computing system and providing a virtual reward within a networked gaming environment to an end user in exchange for utilizing an amount of the portion of the computing resources of the end user computing system. However, none of the related art discloses secure and flexible providing of customer reward data.

### SUMMARY

One of the objects of the present invention is secure and flexible providing of customer reward data. Yet another object of the present invention is to provide customer reward data in the form of an electronic game. Yet another object of the present invention is to provide pseudo-randomly distributed results or reward ticket data values with deterministic statistical distribution, e.g. ensuring a minimum return to end-user ratio.

The problems are solved by the present invention by a system and a method for secure and flexible providing of customer reward data based on descriptive metadata. In one or more embodiments, a first set of reward ticket data values is determined, wherein generating said first set further comprises determine each reward ticket data value as either a reward generating value or a non-reward generating value; a predefined ordered second set of instances of reward ticket data value bins configured to comprise reward ticket data values and descriptive metadata is obtained; exclusive subsets of said first set of reward ticket data values to said second set of instances of reward ticket data value bins are assigned based on said descriptive metadata; a request for delivery of a third set of reward ticket data values is received from a second server, wherein said request for delivery of a third set of ticket data values comprises a second parameter set; said third set of reward ticket data values is selected from said second set of instances of reward ticket data value bins based on said second parameter set and descriptive metadata comprised in reward ticket data value bins to which said selected third set of reward ticket data values have been assigned is modified to indicate that said selected third set of ticket data values have been redeemed; a response for delivery to said second server is sent, wherein said response for delivery is comprising said selected third set of ticket data values;

### BRIEF DESCRIPTION OF DRAWINGS

Embodiments of the invention will now be described in more detail with reference to the appended drawings, wherein:
Fig 1 shows a schematic view of one or more embodiments of a system for secure and flexible providing of customer reward data
Fig 2 shows a schematic view of one or more embodiments of a system for secure and flexible providing of customer reward data.
Fig 3 shows a schematic view of one or more embodiments of a first server.
Fig 4 shows a schematic view of one or more embodiments of a second server
Fig 5 shows a schematic view of one or more embodiments of an end-user device.
Fig 6 shows a flowchart of one or more embodiments of a method in a first server for secure and flexible providing of customer reward data.
Fig 7 shows a flowchart of one or more embodiments of a method in a first server for secure and flexible providing of customer reward data
Fig 8 shows a flowchart of one or more embodiments of a method in a first server for secure and flexible providing of customer reward data to ensure that a reward ticket data value is only selected once
Fig 9 shows a flowchart of one or more embodiments of a method in a second server for secure and flexible providing of customer reward data.
Fig 10 shows a flowchart of one or more embodiments of a method in a second server for secure and flexible providing of customer reward data.
Fig 11 shows a flowchart of one or more embodiments of a method in a end-user device for secure and flexible providing of customer reward data.
Fig 12 shows a flowchart of one or more embodiments of a method in a end-user device for secure and flexible providing of customer reward data.
Fig 13-16 shows a schematic view of one or more use case embodiments for secure and flexible providing of customer reward data.

### DETAILED DESCRIPTION

### INTRODUCTION

To provide rewards in an electronic format may require complex research, development and integration. In some circumstances require special permits may be required, such as gaming licenses, especially when aiming for secure and flexible providing of customer reward data. Therefore, the present invention is directed to a method and a system that allows a provider of electronic rewards, with an existing gaming license, to assist operators or providers of services or goods to provide rewards to end-users. By allowing an operator or provider of services or goods to define flexible metadata pools or reward data value bins from where rewards are selected upon request. The metadata might contain number of reward ticket data values per bin values, purchase value range, electronic game type, service or goods category, operator or provider of services or goods identity, ratio of reward ticket data values as reward generating values or as non-reward generating values or any other descriptive metadata as would be understood by the skilled person.

A provider of electronic rewards might then use a first server to generate a first set of reward ticket data values, wherein generating said first set further comprises determine each reward ticket data value as either or a non-reward generating value. The generated first set of reward ticket data values may then be assigned in exclusive subsets to a second set of instances of reward ticket data value bins based on said descriptive metadata, e.g. using a number of reward ticket data values per bin value. In alternative embodiments, the reward ticket data value bins may be assigned reward ticket data values from other sets of generated reward ticket data values, e.g. with a different level of.

A request for delivery of a third set of reward ticket data values comprising a second parameter set or request parameters is received at some point later in time, either from a second server belonging to operators or providers of services or goods or from an end-user via a web page containing content of the first and/or second server. A third set of reward ticket data values is selected from said second set of instances of reward ticket data value bins based on said second parameter set, e.g. by evaluating request parameters and descriptive metadata based on a reward issuance criteria. Examples of such criteria may be evaluating that said second parameter set comprises an operator or provider of services or goods identity equal to an operator or provider of services or goods identity comprised in descriptive metadata in a reward ticket data value bin. In one example the request is for a single reward ticket data value and is triggered by a user indication, e.g. in a web browser comprising content from the first and/or second server, and the reward is used for displaying a game round of an electronic game in the web browser. In yet another example the request is for a plurality of reward ticket data values and is triggered by the second server. The reward ticket data values may then be delivered to an end-user.

After the third set of reward ticket data values is selected, the descriptive metadata comprised in reward ticket data value bins to which said selected third set of reward ticket data values have been assigned to are modified to indicate that said selected third set of ticket data values have been redeemed. This might in one example be performed using a one-way hash function, to ensure that each reward ticket data values can only be selected once, as would be understood by a skilled version.

A response for delivery is further sent to said second server, wherein said response for delivery is comprising said selected third set of ticket data values. In one example the response comprises a single reward ticket data value and the reward is used for displaying a game round of an electronic game in the web browser. In yet another example the response comprises a plurality of reward ticket data values. The reward ticket data values may then be delivered to an end-user at any point later in time.

If a reward ticket data value provided to an end-user comprises a reward generating value, the user might want to cash in the reward ticket data value in a cash in procedure. Such a cash in procedure might involve:

### Cash in monetary reward

In the scenario when reward is a monetary reward, e.g. allowing an end-user to win his purchase amount back.

### Cash in credits

In the scenario when the reward is a credit reward, such as gaming operator credits or loyalty program credits, e.g. gaming credits, frequent flyer credits, frequent car rental credits, frequent dining credits or frequent shopping credits.

### Cash in goods rewards

In the scenario when reward is a goods reward, e.g. allowing an end-user to trade his reward ticket data value for goods

### Cash in discount offer rewards

In the scenario when reward is a discount offer reward, e.g. allowing an end-user to trade his reward ticket data value for a discount offer.

### SYSTEM EMBODIMENTS

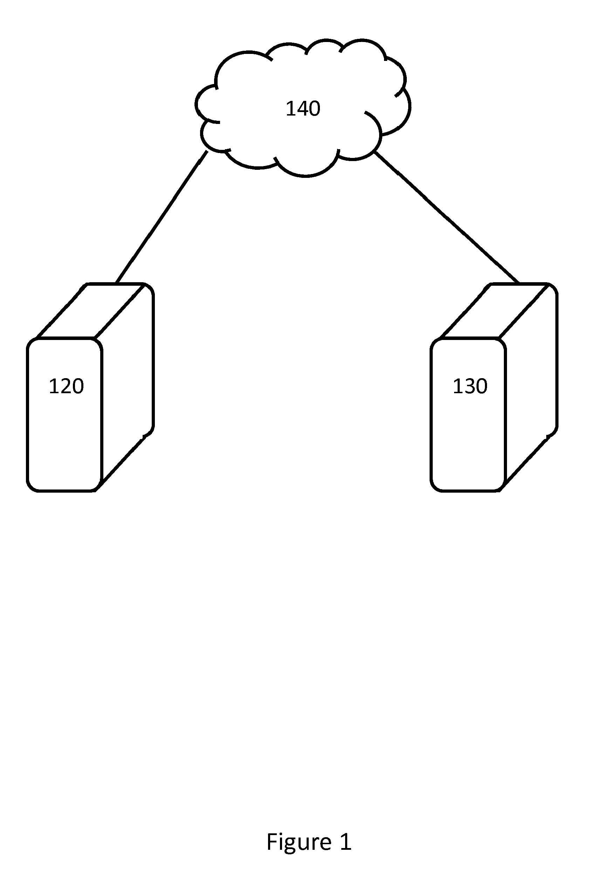

Fig 1 shows a schematic view of one or more embodiments of a system for secure and flexible providing of customer reward data. The system further comprises a first server 120 comprising processor/processing unit provided with specifically designed programming or program code portions adapted to control the first server120 to perform the steps and functions of embodiments of the method described herein and a communications interface configured to send or receive data values or parameters to/from a processor to/from external units via the communications interface. The system further comprises a second server 130 comprising processor/processing unit provided with specifically designed programming or program code portions adapted to control the second server 130 to perform the steps and functions of embodiments of the method described herein and a communications interface configured to send or receive data values or parameters to/from a processor to/from external units via the communications interface. The first server 120 and the second server 130 are communicatively coupled via a communications network 140, wherein the communications network 140 is configured to transfer data in the form of control signals between the first server 120 and the second server 130.

In one or more embodiments, wherein said communications network 140 comprise a selection of a Local Area Network (LAN), Metropolitan Area Network (MAN), Global System for Mobile Network (GSM), Enhanced Data GSM Environment (EDGE), High Speed Downlink Packet Access (HSDPA), Wideband Code Division Multiple Access (W-CDMA), Code Division Multiple Access (CDMA), Time Division Multiple Access (TDMA), Bluetooth®, Zigbee®, Wi-Fi, Voice over Internet Protocol (VoIP), LTE Advanced, IEEE802.16m, WirelessMAN-Advanced, Evolved High-Speed Packet Access (HSPA+), 3GPP Long Term Evolution (LTE), Mobile WiMAX (IEEE 802.16e), Ultra Mobile Broadband (UMB) (formerly Evolution-Data Optimized (EV-DO) Rev. C), Fast Low-latency Access with Seamless Handoff Orthogonal Frequency Division Multiplexing (Flash-OFDM), High Capacity Spatial Division Multiple Access (iBurst®) and Mobile Broadband Wireless Access (MBWA) (IEEE 802.20) systems, High Performance Radio Metropolitan Area Network (HIPERMAN), Beam-Division Multiple Access (BDMA), World Interoperability for Microwave Access (Wi-MAX) and ultrasonic communication, etc., but is not limited thereto.

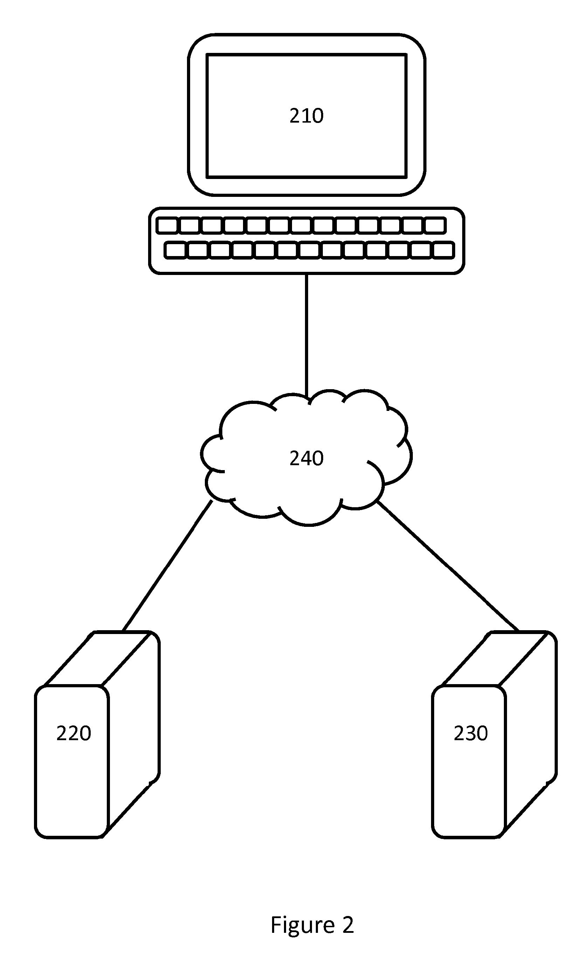

Fig 2 shows a schematic view of one or more embodiments of a system for secure and flexible providing of customer reward data. The system further comprises a first server 220 comprising processor/processing unit provided with specifically designed programming or program code portions adapted to control the first server220 to perform the steps and functions of embodiments of the method described herein and a communications interface configured to send or receive data values or parameters to/from a processor to/from external units via the communications interface. The system further comprises a second server 230 comprising processor/processing unit provided with specifically designed programming or program code portions adapted to control the first server220 to perform the steps and functions of embodiments of the method described herein and a communications interface configured to send or receive data values or parameters to/from a processor to/from external units via the communications interface. The system further comprises an end-user device 210 comprising processor/processing unit provided with specifically designed programming or program code portions adapted to control the end-user device 210 to perform the steps and functions of embodiments of the method described herein and a communications interface configured to send or receive data values or parameters to/from a processor to/from external units via the communications interface. The first server 220, the second server 230 and the end-user device 210 are communicatively coupled via a communications network 240, wherein the communications network is configured to transfer signals in the form of data between the first server 220, the second server 230 and the end-user device 210.

In one or more embodiments, wherein said communications network 140 comprise a selection of a Local Area Network (LAN), Metropolitan Area Network (MAN), Global System for Mobile Network (GSM), Enhanced Data GSM Environment (EDGE), High Speed Downlink Packet Access (HSDPA), Wideband Code Division Multiple Access (W-CDMA), Code Division Multiple Access (CDMA), Time Division Multiple Access (TDMA), Bluetooth®, Zigbee®, Wi-Fi, Voice over Internet Protocol (VoIP), LTE Advanced, IEEE802.16m, WirelessMAN-Advanced, Evolved High-Speed Packet Access (HSPA+), 3GPP Long Term Evolution (LTE), Mobile WiMAX (IEEE 802.16e), Ultra Mobile Broadband (UMB) (formerly Evolution-Data Optimized (EV-DO) Rev. C), Fast Low-latency Access with Seamless Handoff Orthogonal Frequency Division Multiplexing (Flash-OFDM), High Capacity Spatial Division Multiple Access (iBurst®) and Mobile Broadband Wireless Access (MBWA) (IEEE 802.20) systems, High Performance Radio Metropolitan Area Network (HIPERMAN), Beam-Division Multiple Access (BDMA), World Interoperability for Microwave Access (Wi-MAX) and ultrasonic communication, etc., but is not limited thereto.

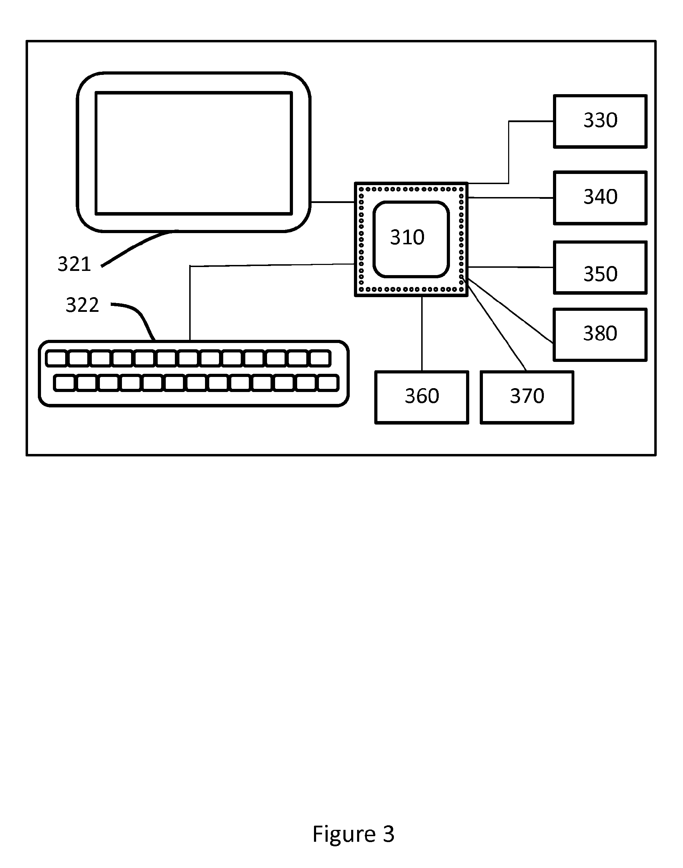

Fig 3 shows a schematic view of one or more embodiments of a first server comprising at least one memory 330 configured to store data values or parameters received from the processor 310 or to retrieve and send data values or parameters to the processor 310. In one or more embodiments the first server further comprises a display 321 configured to receive a signal from a processor 310 and to display the received signal as displayed data, e.g. to a user of the first server. In one or more embodiments the first server further comprises an input device 322 configured to receive input or indications from a user. In one exemplary embodiment the display 321 is integrated with a user input device 322 and the first server further comprises a touch screen 321 configured to receive a signal from the processor 310 and to display the received signal as displayed data, e.g. to a user of the first server. The touch screen 321 is further configured to receive indications from a user and to generate data indicative of user input, thereby enabling the user to interact by user indications with what is displayed, e.g. graphical objects displayed on the touch screen using various types of gestures. The touch screen is further configured to send the generated data as a signal to said processor 310. In one or more embodiments first server further comprises a communications interface 340 configured to send or receive data values or parameters to/from a processor 310 to/from external units via the communications interface 350.

In one or more embodiments, wherein said first server further optionally comprises a customer reward data engine 360 (CRDE) configured for secure and flexible providing of customer reward data, a pseudorandom number generator 370 (PRNG) configured to generate a set of reward ticket data values and a customer reward database handler 380 (CRDH) configured to save and retrieve data upon request from the CRDE;

In one or more embodiments, the processor/processing unit 310 may be a processor such as a general or specific purpose processor/processing unit for example a microprocessor, microcontroller or other control logic that comprises sections of code or code portions, stored on a computer readable storage medium, such as the memory 330, that are fixed to perform certain tasks but also other alterable sections of code, stored on a computer readable storage medium, that can be altered during use. Such alterable sections of code can comprise parameters that are to be used as input for the various tasks, such as generating reward ticket data values or any other parameter related operations known to a person skilled in the art and applied without inventive skill.

In one or more embodiments, said communications interface 350 may comprise a selection of a Local Area Network (LAN), Metropolitan Area Network (MAN), Global System for Mobile Network (GSM), Enhanced Data GSM Environment (EDGE), High Speed Downlink Packet Access (HSDPA), Wideband Code Division Multiple Access (W-CDMA), Code Division Multiple Access (CDMA), Time Division Multiple Access (TDMA), Bluetooth®, Zigbee®, Wi-Fi, Voice over Internet Protocol (VoIP), LTE Advanced, IEEE802.16m, WirelessMAN-Advanced, Evolved High-Speed Packet Access (HSPA+), 3GPP Long Term Evolution (LTE), Mobile WiMAX (IEEE 802.16e), Ultra Mobile Broadband (UMB) (formerly Evolution-Data Optimized (EV-DO) Rev. C), Fast Low-latency Access with Seamless Handoff Orthogonal Frequency Division Multiplexing (Flash-OFDM), High Capacity Spatial Division Multiple Access (iBurst®) and Mobile Broadband Wireless Access (MBWA) (IEEE 802.20) systems, High Performance Radio Metropolitan Area Network (HIPERMAN), Beam-Division Multiple Access (BDMA), World Interoperability for Microwave Access (Wi-MAX) and ultrasonic communication, etc., but is not limited thereto.

In this document, the terms "computer program product" and "computer-readable storage medium" may be used generally to refer to media such as the memory 330 or the storage medium of processing unit 310 or an external storage medium. These and other forms of computer-readable storage media may be used to provide instructions to processing unit 310 for execution. Such instructions, generally referred to as "computer program code" (which may be grouped in the form of computer programs or other groupings), when executed, enable the computer system to perform features or functions of embodiments of the current technology invention. Further, as used herein, "logic" may include hardware, software, firmware, or a combination of thereof.

In one or more embodiments the memory 330 may comprise a selection of a hard RAM, disk drive, a floppy disk drive, a magnetic tape drive, an optical disk drive, a CD or DVD drive (R or RW), or other removable or fixed media drive.

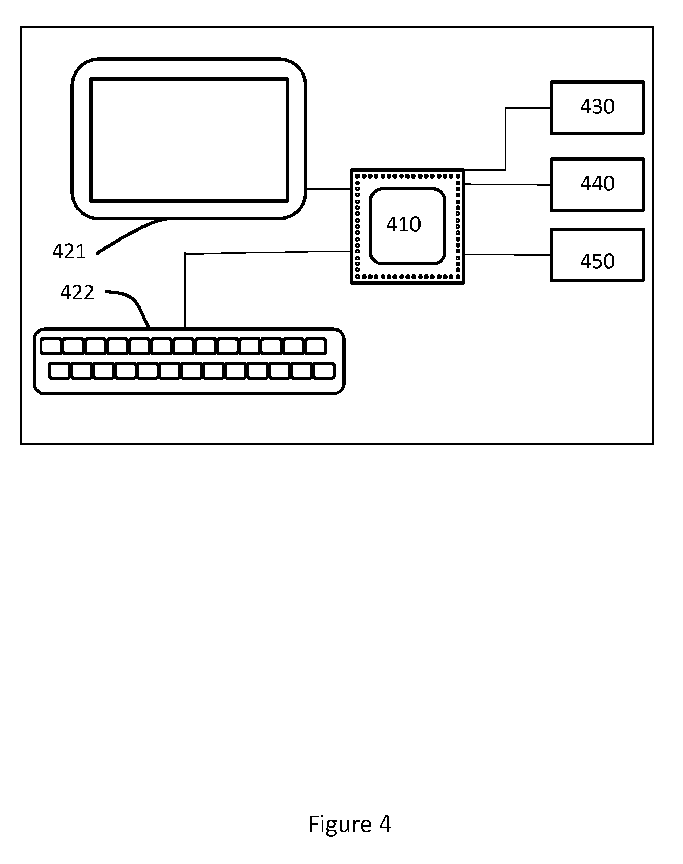

Fig 4 shows a schematic view of one or more embodiments of a second server comprising at least one memory 430 configured to store data values or parameters received from the processor 410 or to retrieve and send data values or parameters to the processor 410. In one or more embodiments the second server further comprises a display 421 configured to receive a signal from a processor 410 and to display the received signal as displayed data, e.g. to a user of the second server. In one or more embodiments the second server further comprises an input device 422 configured to receive input or indications from a user. In one exemplary embodiment the display 421 is integrated with a user input device 422 and the second server further comprises a touch screen 421 configured to receive a signal from the processor 410 and to display the received signal as displayed data, e.g. to a user of the second server. The touch screen 421 is further configured to receive indications from a user and to generate data indicative of user input, thereby enabling the user to interact by user indications with what is displayed, e.g. graphical objects displayed on the touch screen using various types of gestures. The touch screen is further configured to send the generated data as a signal to said processor 410. In one or more embodiments second server further comprises a communications interface 440 configured to send or receive data values or parameters to/from a processor 410 to/from external units via the communications interface 450.

In one or more embodiments, the processor/processing unit 410 may be a processor such as a general or specific purpose processor/processing unit for example a microprocessor, microcontroller or other control logic that comprises sections of code or code portions, stored on a computer readable storage medium, such as the memory 430, that are fixed to perform certain tasks but also other alterable sections of code, stored on a computer readable storage medium, that can be altered during use. Such alterable sections of code can comprise parameters that are to be used as input for the various tasks, such as generating reward ticket data values or any other parameter related operations known to a person skilled in the art and applied without inventive skill.

In one or more embodiments, said communications interface 450 may comprise a selection of a Local Area Network (LAN), Metropolitan Area Network (MAN), Global System for Mobile Network (GSM), Enhanced Data GSM Environment (EDGE), High Speed Downlink Packet Access (HSDPA), Wideband Code Division Multiple Access (W-CDMA), Code Division Multiple Access (CDMA), Time Division Multiple Access (TDMA), Bluetooth®, Zigbee®, Wi-Fi, Voice over Internet Protocol (VoIP), LTE Advanced, IEEE802.16m, WirelessMAN-Advanced, Evolved High-Speed Packet Access (HSPA+), 3GPP Long Term Evolution (LTE), Mobile WiMAX (IEEE 802.16e), Ultra Mobile Broadband (UMB) (formerly Evolution-Data Optimized (EV-DO) Rev. C), Fast Low-latency Access with Seamless Handoff Orthogonal Frequency Division Multiplexing (Flash-OFDM), High Capacity Spatial Division Multiple Access (iBurst®) and Mobile Broadband Wireless Access (MBWA) (IEEE 802.20) systems, High Performance Radio Metropolitan Area Network (HIPERMAN), Beam-Division Multiple Access (BDMA), World Interoperability for Microwave Access (Wi-MAX) and ultrasonic communication, etc., but is not limited thereto.

In this document, the terms "computer program product" and "computer-readable storage medium" may be used generally to refer to media such as the memory 430 or the storage medium of processing unit 410 or an external storage medium. These and other forms of computer-readable storage media may be used to provide instructions to processing unit 410 for execution. Such instructions, generally referred to as "computer program code" (which may be grouped in the form of computer programs or other groupings), when executed, enable the computer system to perform features or functions of embodiments of the current technology invention. Further, as used herein, "logic" may include hardware, software, firmware, or a combination of thereof.

In one or more embodiments the memory 430 may comprise a selection of a hard RAM, disk drive, a floppy disk drive, a magnetic tape drive, an optical disk drive, a CD or DVD drive (R or RW), or other removable or fixed media drive.

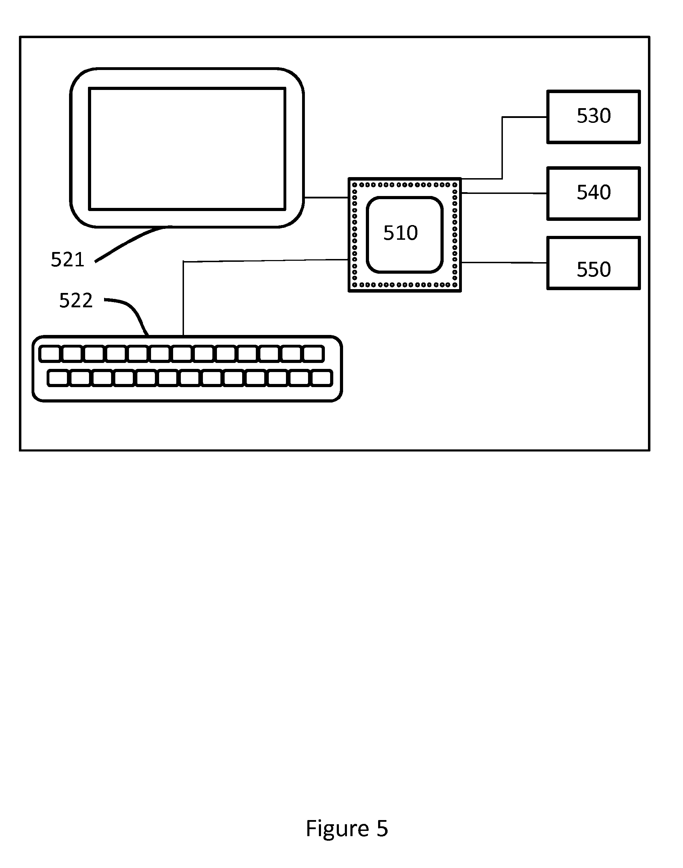

Fig 5 shows a schematic view of one or more embodiments of an end-user device comprising at least one memory 530 configured to store data values or parameters received from the processor 510 or to retrieve and send data values or parameters to the processor 510. In one or more embodiments the end-user device further comprises a display 521 configured to receive a signal from a processor 510 and to display the received signal as displayed data, e.g. to a user of the end-user device. In one or more embodiments the end-user device further comprises an input device 522 configured to receive input or indications from a user. In one exemplary embodiment the display 521 is integrated with a user input device 522 and the end-user device further comprises a touch screen 521 configured to receive a signal from the processor 510 and to display the received signal as displayed data, e.g. to a user of the end-user device. The touch screen 521 is further configured to receive indications from a user and to generate data indicative of user input, thereby enabling the user to interact by user indications with what is displayed, e.g. graphical objects displayed on the touch screen using various types of gestures. The touch screen is further configured to send the generated data as a signal to said processor 510. In one or more embodiments end-user device further comprises a communications interface 540 configured to send or receive data values or parameters to/from a processor 510 to/from external units via the communications interface 550.

In one or more embodiments, the processor/processing unit 510 may be a processor such as a general or specific purpose processor/processing unit for example a microprocessor, microcontroller or other control logic that comprises sections of code or code portions, stored on a computer readable storage medium, such as the memory 530, that are fixed to perform certain tasks but also other alterable sections of code, stored on a computer readable storage medium, that can be altered during use. Such alterable sections of code can comprise parameters that are to be used as input for the various tasks, such as generating reward ticket data values or any other parameter related operations known to a person skilled in the art and applied without inventive skill.

In one or more embodiments, said communications interface 550 may comprise a selection of a Local Area Network (LAN), Metropolitan Area Network (MAN), Global System for Mobile Network (GSM), Enhanced Data GSM Environment (EDGE), High Speed Downlink Packet Access (HSDPA), Wideband Code Division Multiple Access (W-CDMA), Code Division Multiple Access (CDMA), Time Division Multiple Access (TDMA), Bluetooth®, Zigbee®, Wi-Fi, Voice over Internet Protocol (VoIP), LTE Advanced, IEEE802.16m, WirelessMAN-Advanced, Evolved High-Speed Packet Access (HSPA+), 3GPP Long Term Evolution (LTE), Mobile WiMAX (IEEE 802.16e), Ultra Mobile Broadband (UMB) (formerly Evolution-Data Optimized (EV-DO) Rev. C), Fast Low-latency Access with Seamless Handoff Orthogonal Frequency Division Multiplexing (Flash-OFDM), High Capacity Spatial Division Multiple Access (iBurst®) and Mobile Broadband Wireless Access (MBWA) (IEEE 802.20) systems, High Performance Radio Metropolitan Area Network (HIPERMAN), Beam-Division Multiple Access (BDMA), World Interoperability for Microwave Access (Wi-MAX) and ultrasonic communication, etc., but is not limited thereto.

In this document, the terms "computer program product" and "computer-readable storage medium" may be used generally to refer to media such as the memory 530 or the storage medium of processing unit 510 or an external storage medium. These and other forms of computer-readable storage media may be used to provide instructions to processing unit 510 for execution. Such instructions, generally referred to as "computer program code" (which may be grouped in the form of computer programs or other groupings), when executed, enable the computer system to perform features or functions of embodiments of the current technology invention. Further, as used herein, "logic" may include hardware, software, firmware, or a combination of thereof.

In one or more embodiments the memory 530 may comprise a selection of a hard RAM, disk drive, a floppy disk drive, a magnetic tape drive, an optical disk drive, a CD or DVD drive (R or RW), or other removable or fixed media drive.

### METHOD EMBODIMENTS

The present invention is directed to a method that allows a first server, e.g. operated by a provider of electronic rewards with or without an existing gaming license, to assist a second server, e.g. operated by operators or providers of services or goods, to provide rewards to end-users in a flexible and secure manner.

### Providing of customer reward data based on a request from a second server or an end-user device.

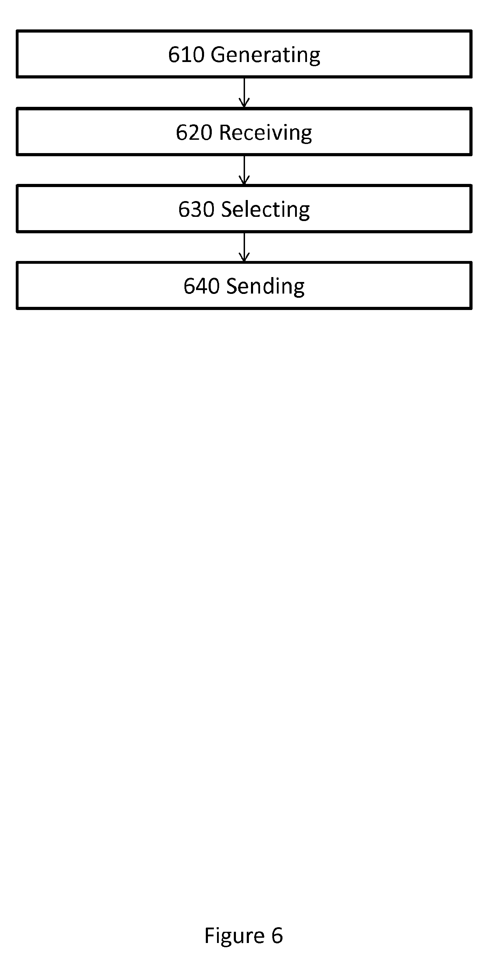

Fig 6 shows a flowchart of one or more embodiments of a method in a first server for secure and flexible providing of customer reward data.

A method in a first server for secure and flexible providing of customer reward data, the method comprising:
generating 610 a first set of reward ticket data values, wherein generating said first set further comprises determine each reward ticket data value as either a reward generating value or a non-reward generating value;
receiving 620 a request for delivery of a third set of reward ticket data values from a node, wherein said request for delivery of a third set of ticket data values comprises a second parameter set;
selecting 630 said third set of reward ticket data values based on said second parameter set;
sending 640 a response for delivery to said node, wherein said response for delivery is comprising said selected third set of ticket data values;

In one embodiment of the present invention the method is applied to a business-to-business scenario, where the first server and a second server communicate to provide customer reward data. This could in one example be an operator or provider of services or goods interacting with an end user via content on a webpage and the request is triggered by an end-user request to accept a reward, e.g. to win his credit or purchase amount back. In yet another example, this could be an operator or provider of services or goods requesting a predetermined amount of customer rewards, such as a batch of reward ticket data values, intended for later distribution to end-users.

In one or more embodiments, wherein said request for delivery is received from a second server and said response for delivery is sent to a second server.

In one embodiment of the present invention the method is applied to a business to end-user scenario, where the first server and an end-user communicate to provide customer reward data. This could in one example be a provider of electronic rewards interacting directly with an end user, e.g. via content on a webpage, and the request is sent by an end-user device to obtain a reward, e.g. obtain a chance to win his credit or purchase amount back.

In one or more embodiments, wherein said request for delivery is received from an end-user device and said response for delivery is sent to an end-user device.

In one or more embodiments, wherein selecting is further based on descriptive metadata.

### Flexible providing of customer reward data

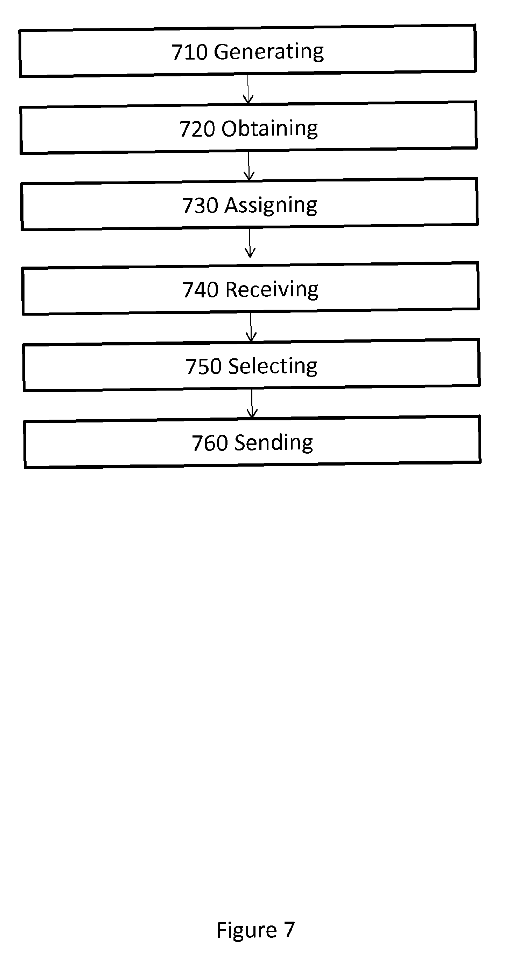

Fig 7 shows a flowchart of one or more embodiments of a method in a first server for secure and flexible providing of customer reward data where an operator or provider of services or goods might want to differentiate rewards and provide the reward in a flexible manner based on various aspects that may be represented by descriptive metadata, examples of such aspects might be purchase amount, type of electronic game used to display the customer reward data to represent a reward generating value or a non-reward generating value, a services or goods category or any other operator, provider, services or goods related data as would be understood by a skilled person.

In one example an operator or provider of services or goods wants to offer end-users purchasing a KIWI shoe a discount on a second object and to offer end-users purchasing a PEAR shoe a discount on a third object.

In one example an operator or provider of services or goods wants to offer end-users purchasing a KIWI car a reward offering 1/10 probability to win a bonus object and to offer end-users purchasing a PEAR car a 1/100 probability to win a bonus object. Such a bonus object could be any physical object as would be understood by a skilled person.

In one example an operator or provider of services or goods wants to offer end-users purchasing a KIWI phone a 1/1000 probability to win their money back and to offer end-users purchasing a PEAR phone a 1/100 000 probability to win their money back.

In yet another example an operator or provider of services or goods wants to offer end-users depositing credits into an electronic wallet to gamble in a KIWI game a 1/1000 probability to win their credits back and to offer end-users depositing credits into an electronic wallet to gamble in a PEAR game a 1/100 000 probability to win their credits back.

By allowing an operator or provider of services or goods to define flexible metadata value pools or reward data value bins, comprising configurable metadata, from where reward data values are selected upon request based on a provided second parameter set.

In one or more embodiments:
A method in a first server for secure and flexible providing of customer reward data, the method comprising:
   generating 710 a first set of reward ticket data values, wherein generating said first set further comprises determine each reward ticket data value as either a reward generating value or a non-reward generating value;
   obtaining 720 a predefined ordered second set of instances of reward ticket data value bins configured to comprise reward ticket data values and descriptive metadata assigning 730 exclusive subsets of said first set of reward ticket data values to said second set of instances of reward ticket data value bins based on said descriptive metadata;
   receiving 740 a request for delivery of a third set of reward ticket data values, wherein said request for delivery of a third set of ticket data values comprises a second parameter set;
   selecting 750 said third set of reward ticket data values from said second set of instances of reward ticket data value bins based on said second parameter set and said descriptive metadata;
   sending 760 a response for delivery, wherein said response for delivery is comprising said selected third set of ticket data values;

As mentioned above the method may be applied in a business to business or in a business to end-user scenario:
In one or more embodiments, wherein said request for delivery is received from a second server and said response for delivery is sent to a second server.
In one or more embodiments, wherein said request for delivery is received from an end-user device and said response for delivery is sent to an end-user device.

### Secure providing of customer reward data

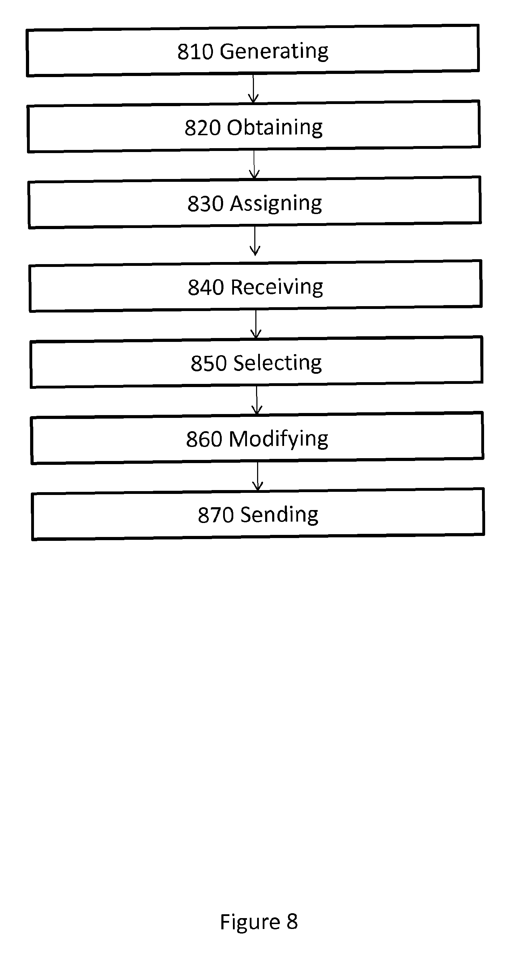

Fig 8 shows a flowchart of one or more embodiments of a method in a first server for secure and flexible providing of customer reward data where to ensure that a reward ticket data value is only selected once, a reward ticket redemption status value may be modified to indicate that a particular ticket has been selected. In one non-limiting example this might be performed by simply changing a Boolean value from FALSE to TRUE. In yet another example the reward ticket redemption status value may be modified by applying a cryptographic hash function on a subset of the reward ticket data value, e.g. a universally unique identifier.

In one or more embodiments, wherein the method further comprises modifying 860 reward ticket redemption status values comprised in said reward ticket data values of said selected third set of reward ticket data values to indicate that said selected third set of ticket data values have been redeemed;

To ensure that each reward ticket data value are globally unique and difficult to anticipate or breach it may be generate by using a cryptographic random number generator (RNG)

In one or more embodiments, the first set of reward ticket data values may be generated with high entropy or randomness such that the probability of randomly guessing a valid reward ticket data value by observing another is reduced. In one example reward ticket data values may be generated using a pseudo-random number generator (PRNG) or a cryptographically secure pseudo-random number generator (CSPRNG) complying with FIPS 140-2, Security Requirements for Cryptographic Modules. The random number generators may be using algorithms such as Fisher-Yates shuffle, Mersenne Twister, Yarrow (www.counterpane.com/yarrow), Rijndael Algorithm or SUN Microsystem's (now Oracle) Java Secure "SHA1PRNG". IN yet another example reward ticket data values comprises generated immutable universally unique identifier (UUID), pseudo-random unique ID using a cryptographically strong random number minimally complies with the statistical random number generator tests specified in FIPS 140-2, Security Requirements for Cryptographic Modules, section 4.9.1.

In yet another embodiment wherein the generated reward ticket data value further comprises a selection of a reward ticket identity, a reward ticket short identity, a reward ticket data value bin identity, a first set identity, a reward ticket redemption status value or generation batch identities.

In one or more embodiments, wherein said reward ticket identity is an immutable universally unique identifier (UUID).

In one or more embodiments, wherein said request for delivery is cryptographically signed based on a selection of a first server identity, a second server identity or a and-user device identity.

In one or more embodiments, wherein said response for delivery is cryptographically signed based on a selection of a first server identity, a second server identity or a and-user device identity.

### Descriptive metadata for providing of customer reward data

In one or more embodiments, wherein said descriptive metadata comprised in further comprises a number of reward ticket data values per bin value, a purchase value range, an electronic game type, a service or goods category, operator or provider of services or goods identity, ratio of reward ticket data values as reward generating values or as non-reward generating values or any other descriptive metadata as would be understood by the skilled person.

### Providing of customer reward data - Modularization

To ensure flexibility, system lifetime and future compatibility, the first server might be modularized into at least three functional blocks CRDE, PRNG and CRDH, that will handle the method steps of secure and flexible providing of customer reward data, generating a set of reward ticket data values and save and retrieve data upon request. By modularizing into functional blocks

In one or more embodiments, wherein said first server further comprises a customer reward data engine (CRDE) configured for secure and flexible providing of customer reward data, a pseudorandom number generator (PRNG) configured to generate a set of reward ticket data values and a customer reward database handler (CRDH) configured to save and retrieve data upon request from the CRDE.

### Providing of customer reward data -Generating

Generation of reward ticket data values may be based on various batch parameters, indicative of the number of reward ticket data values to be generated and the distribution of reward generating values and non-reward generating values within the generated reward ticket data values.

In one or more embodiments, wherein generating a first set of reward ticket data values further comprises:
obtaining a batch parameter set, wherein the batch parameter set comprises at least a batch id and a reward ticket data value count value;
generating a first set of reward ticket data values based on said obtained batch parameter set;
saving said obtained first set of reward ticket data values;

In one or more embodiments, wherein said batch parameter set is obtained via a request from a second server;

In one or more embodiments, wherein the batch parameter set further comprises an absolute count of reward generating values or a relative percentage of reward generating values, wherein the relative percentage is calculated as a quota of (reward ticket data value count value/ absolute count of reward generating values).

In one or more embodiments using a modularized functional blocks:
In one or more embodiments, wherein generating a first set of reward ticket data values further comprises:
   obtaining a batch parameter set by the CRDE via a request to the CRDH, wherein the batch parameter set comprises at least a batch id and a reward ticket data value count value;
   obtaining a first set of reward ticket data values by the CRDE via a request to the PRNG, wherein the request comprises said obtained batch parameter set, wherein said first set of reward ticket data values are generated by the PRNG based on said batch parameter set;
   saving said obtained first set of reward ticket data values by the CRDE via a request to the CRDH;

In one or more embodiments, wherein said batch parameter set is obtained via a request to the CRDH;

In one or more embodiments, wherein said batch parameter set is obtained via a request from a second server;

In one or more embodiments, wherein the batch parameter set further comprises an absolute count of reward generating values or a relative percentage of reward generating values, wherein the relative percentage is calculated as a quota of (reward ticket data value count value/ absolute count of reward generating values).

### Providing of customer reward data -Obtaining reward ticket data value bins

In one or more embodiments, wherein obtaining a predefined ordered second set of instances of reward ticket data value bins further comprises:
obtaining a bin parameter set, wherein said bin parameter set comprises set of number of reward ticket data values per bin values;
generating a second set of instances of reward ticket data value bins based on said bin parameter set;
assigning descriptive metadata to the generated instances of reward ticket data value bins based on said bin parameter set;
saving said generated instances of reward ticket data value bins;

In one or more embodiments, wherein said bin parameter set is obtained via a request from a second server;

In one or more embodiments using a modularized functional blocks:
In one or more embodiments, wherein obtaining a predefined ordered second set of instances of reward ticket data value bins further comprises:
   obtaining a bin parameter set by the CRDE, wherein said bin parameter set comprises set of number of reward ticket data values per bin values;
   generating a second set of instances of reward ticket data value bins by the CRDE based on said bin parameter set;
   assigning descriptive metadata to the generated instances of reward ticket data value bins based on said bin parameter set;
   saving said generated instances of reward ticket data value bins by the CRDE via a request to the CRDH;
In one or more embodiments, wherein said bin parameter set is obtained via a request to the CRDH;
In one or more embodiments, wherein said bin parameter set is obtained via a request from a second server;

### Providing of customer reward data -Assigning

To provide flexible provision of customer reward data, each metadata specific bin must be assigned generated reward ticket data values.

In one or more embodiments, wherein assigning further comprises:
selecting said first set of generated reward ticket data values;
assigning said selected first set to an instance of said reward ticket data value bins;

In one or more embodiments, wherein selecting further comprises selecting a second set of generated reward ticket data values and assigning further comprises assigning said selected second set to an instance of said reward ticket data value bins.

In one or more embodiments, wherein assigning further comprises shuffling said first set of generated reward ticket data values;
In one or more embodiments, wherein assigning further comprises shuffling said second set of generated reward ticket data values;
In one non limiting example shuffling may be performed using any of Fisher-Yates shuffle Algorithm, Mersenne Twister Algorithm, Yarrow (www.counterpane.com/yarrow) Algorithm, Rijndael Algorithm or SUN Microsystem's (now Oracle) Java Secure "SHA1PRNG" Algorithm, as would be understood by a skilled person.

In one or more embodiments, wherein assigning further comprises:
selecting a subset of said first set of generated reward ticket data values based on the descriptive metadata of a first instance of said reward ticket data value bins by the CRDE;
assigning said selected subset to a first instance of said reward ticket data value bins and excluding said selected subset from said first set of generated reward ticket data values by the CRDE;
repeatedly selecting a subset of said first set of generated reward ticket data values based on the descriptive metadata of a next instance of said reward ticket data value bins, assigning said selected subset to the next instance of said reward ticket data value bins and excluding said selected subset from said first set of generated ticket data values until all instances of reward ticket data value bins have been assigned ticket data values by the CRDE;

### Providing of customer reward data -Receiving request

In one or more embodiments, wherein receiving a request for delivery further comprises:
receiving a request for delivery of a third set of reward ticket data values from a second server by the CRDE;
In one or more embodiments, wherein selecting said third set of reward ticket data values further comprises:
   determining a method to select the third set of reward ticket data values based on said second parameter set by the CRDE;
   selecting said third set of reward ticket data values by the CRDE based on said determined method;

In one or more embodiments, wherein said second parameter set comprises a transaction amount value and determining a method to select the third set of reward ticket data values is based on said transaction amount value, wherein the method is determined to be selecting a reward ticket data value from an instance of reward ticket data value bins where said transaction amount value is within a transaction amount value range comprised in the descriptive metadata.

In one or more embodiments, wherein said second parameter set comprises a reward ticket data amount value and an operator id, wherein determining a method to select the third set of reward ticket data values is based on said reward ticket data amount value and an operator id, wherein the method is determined to be selecting a number of reward ticket data values equal to said reward ticket data amount value from instances of reward ticket data value bins where said operator id comprised in said second parameter set is equal to an operator id comprised in the descriptive metadata.

### Providing of customer reward data -Method in second server

As previously described the system may comprise interrelated nodes, such as the first and second server. The second server may be operated by an operator or provider of services or goods, wherein the second server is configured to sending a request for delivery, receiving a response for delivery, displaying a reward ticket data value, wherein the reward ticket data value may be displayed as an electronic game. The second server may further be configured to present content as a webpage on an end-user device, to receive control signals from an end-user device and to integrate content received from a first server with content being displayed by the second server.

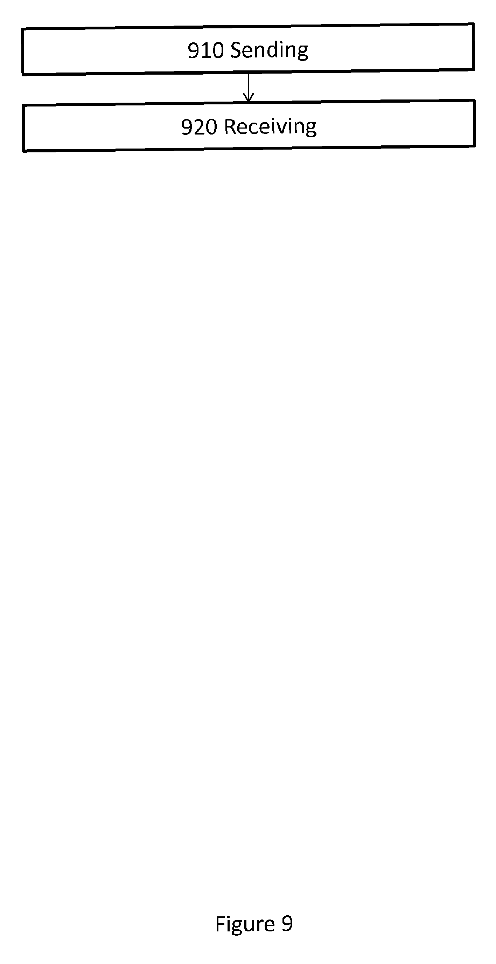

Fig 9 shows a flowchart of one or more embodiments of a method in a second server for secure and flexible providing of customer reward data.

A method in a second server of providing customer reward data, the method comprising:
sending 910 a request for delivery of a third set of reward ticket data values to a first server, wherein said request for delivery of a third set of reward ticket data values comprises a second parameter set;
receiving 920 a response for delivery from said first server, wherein said response for delivery is comprising a selected third set of reward ticket data values;

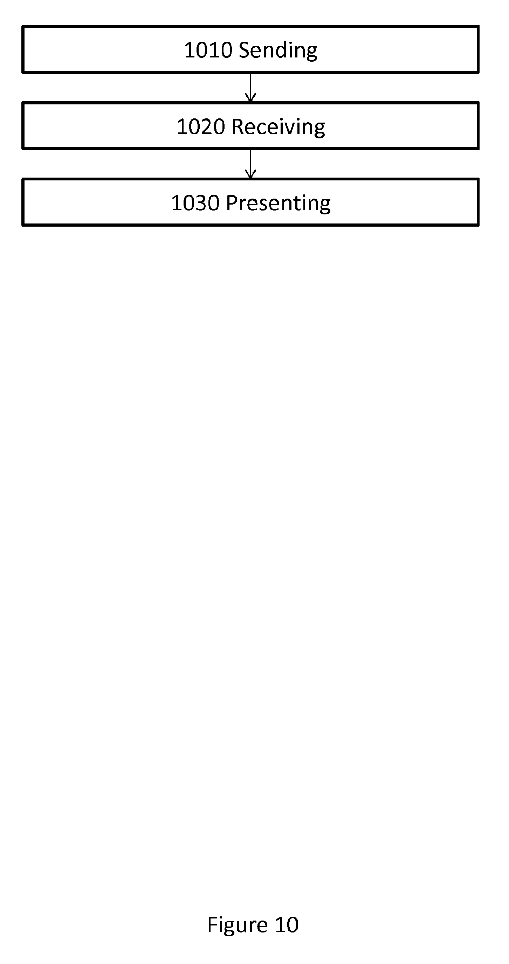

Fig 10 shows a flowchart of one or more embodiments of a method in a second server for secure and flexible providing of customer reward data.

In one or more embodiments, further comprising presenting 1030 said third set of reward ticket data values on an end-user device.

In one or more embodiments, wherein presenting comprises presenting a game animation on the user device, such as a scratch card, a slot machine, a poker game or any other graphical animation of an electronic game as would be understood by a skilled person.

In one or more embodiments, further comprising printing a hardcopy representation of said third set of reward ticket data values, such as a scratch card or a ticket.

A computer program product comprising computer readable code configured to, when executed in a processor, perform any or all of the method steps described herein.

A non-transitory computer readable memory on which is stored computer readable code configured to, when executed in a processor, perform any or all of the method steps described herein.

### Providing of customer reward data -Method in End-User Device

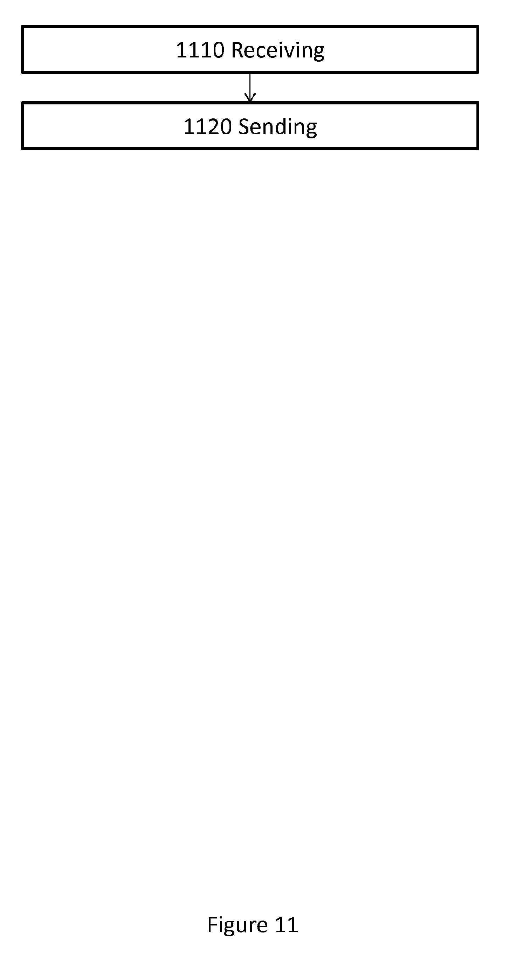

Fig 11 shows a flowchart of one or more embodiments of a method in a end-user device for secure and flexible providing of customer reward data.

A method in an end-user device of providing customer reward data, the method comprising:
receiving 1110 a user indication as a user input signal;
sending 1120 a request for delivery of a third set of reward ticket data values based on said user input signal;

A method in an end-user device for retrieving a provided customer reward data, the method comprising:
Receiving 1110 an additional-information request identifying requested additional-information data;
sending 1120 an additional-information response, wherein said response additional-information data;

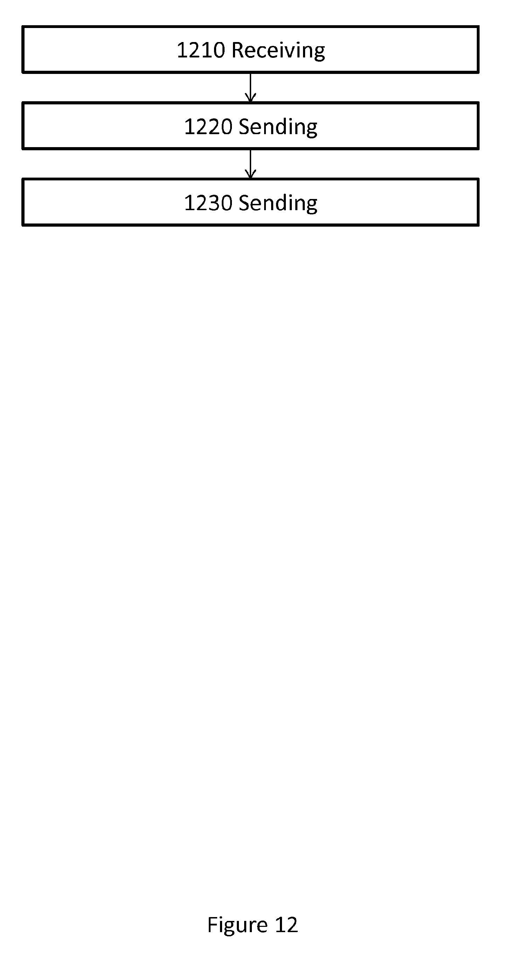

Fig 12 shows a flowchart of one or more embodiments of a method in a end-user device for secure and flexible providing of customer reward data.

In one or more embodiments, wherein the method further comprise sending 1230 a reward cash-in request, wherein said cash-in request comprises a reward ticket data value;

A computer program product comprising computer readable code configured to, when executed in a processor, perform any or all of the method steps described herein.

A non-transitory computer readable memory on which is stored computer readable code configured to, when executed in a processor, perform any or all of the method steps described herein.

### Cash in monetary reward

In the scenario when reward is a monetary reward, e.g. allowing an end-user to win his purchase amount back, the first server either has a predefined email address associated to a reward ticket data value or receives a cash-in request comprising a reward ticket data value and an email address, thereby allowing the first server to send an email message to the end-user to request payment details, such as a bank account with associated International Bank Account Number (IBAN) and Bank Identifier Code(BIC).

In one or more embodiments, wherein said additional-information data comprises payment details, wherein the payment details comprises a bank account number with associated International Bank Account Number (IBAN) and Bank Identifier Code(BIC).

### Cash in credits

In the scenario when the reward is a credit reward, such as gaming operator credits or loyalty program credits, e.g. gaming credits, frequent flyer credits, frequent car rental credits, frequent dining credits or frequent shopping credits. In this scenario, the first server either has a predefined operator or provider of services or goods identity associated to a reward ticket data value or receives a cash-in request comprising a reward ticket data value and a operator or provider of services or goods identity, thereby allowing the first server to send a request to a loyalty program server to add credits.

In one or more embodiments, wherein said additional-information data comprises credit details, wherein the credit details comprises operator or provider of services or goods identity.

### Cash in goods rewards

In the scenario when reward is a goods reward, e.g. allowing an end-user to trade his reward ticket data value for goods, the first server either has a predefined email address associated to a reward ticket data value or receives a cash-in request comprising a reward ticket data value and an email address, thereby allowing the first server to send an email message to the end-user to request shipment address details, such as first name, last name, street, street number, zip code, city and country. The shipment address details may later be used by an operator or provider of services or goods to ship the goods to the end user, either directly or through a subcontractor.

In one or more embodiments, wherein said additional-information data comprises shipment address details , wherein the credit details comprises a selection of first name, last name, street, street number, zip code, city and country.

### Cash in discount offer rewards

In the scenario when reward is a discount offer reward, e.g. allowing an end-user to trade his reward ticket data value for a discount offer, the first server either has a predefined email address associated to a reward ticket data value or receives a cash-in request comprising a reward ticket data value and an email address, thereby allowing the first server to send an email message to the end-user to request membership identity or credit card details, such as membership number, membership card number or credit card number. The shipment address details may later be used by an operator or provider of services or goods to offer discounts when a membership number, membership card number or credit card number is used for purchase at the operator or provider of services or goods.

In one or more embodiments, wherein said additional-information data comprises membership identity details or credit card details.

In one or more embodiments, wherein the credit card details comprises a selection of card number, name, expiration date, card verification code (CVC)

In one or more embodiments, wherein the membership identity details comprises a selection of membership number, card number, name, expiration date, card verification code (CVC)

### USE CASE EMBODIMENTS

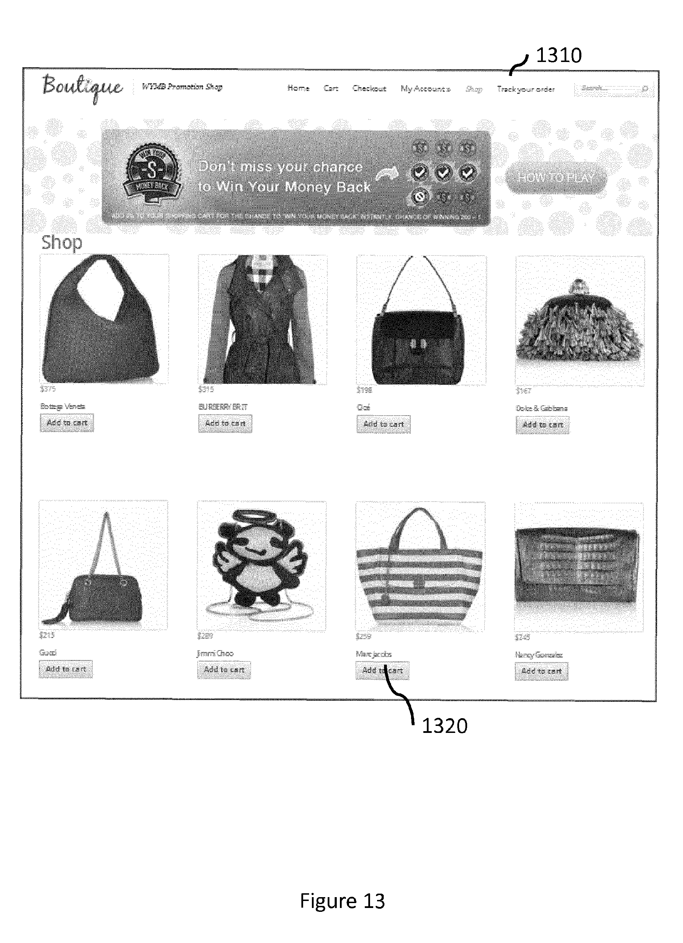

One example of a method and a system in a first server for secure and flexible providing of customer reward data is shown in fig 13-16. Typically a second server presents content on a webpage, shown in fig 13, 1310 that allows a user to provide user input data as user indications indicating goods to purchase 1320.

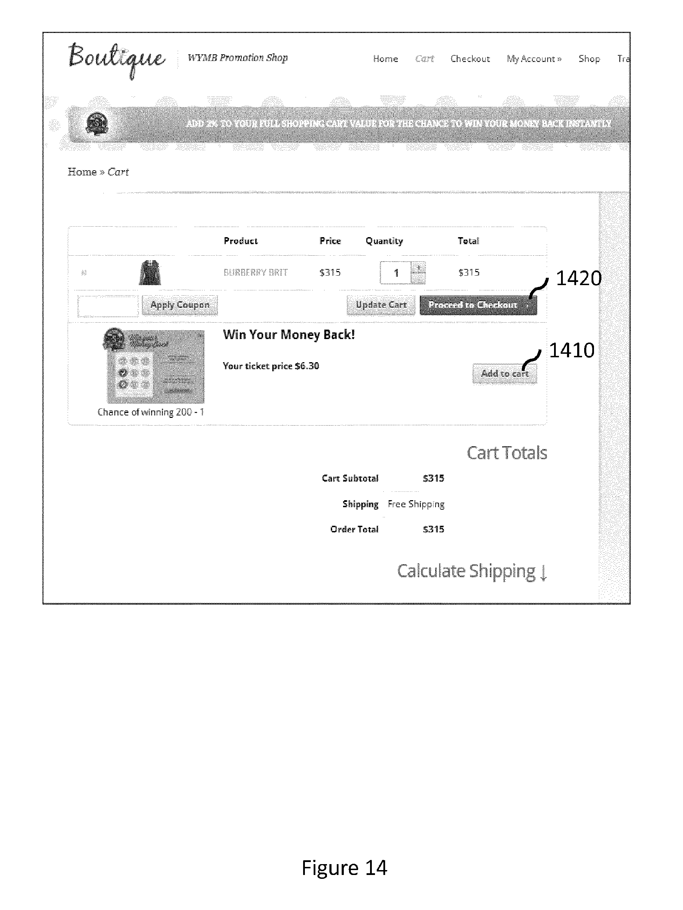

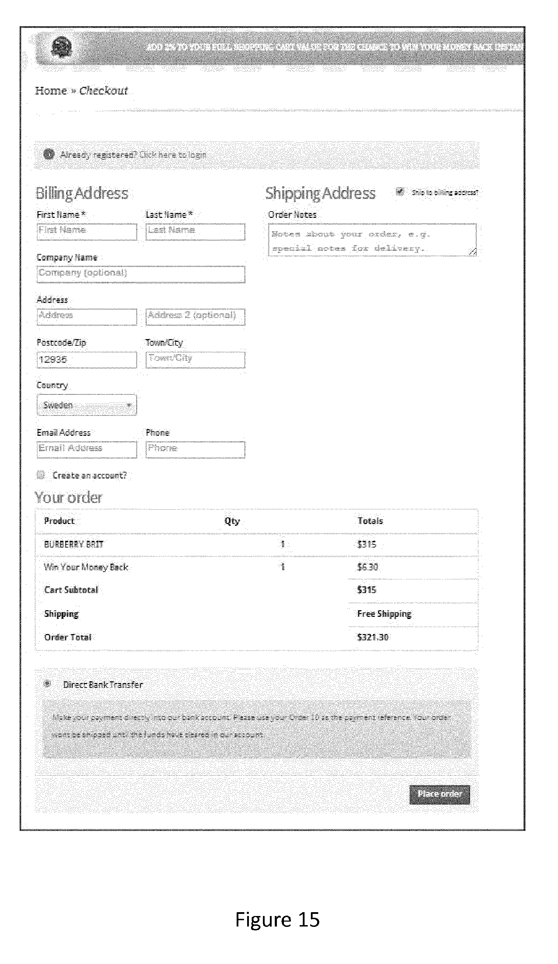

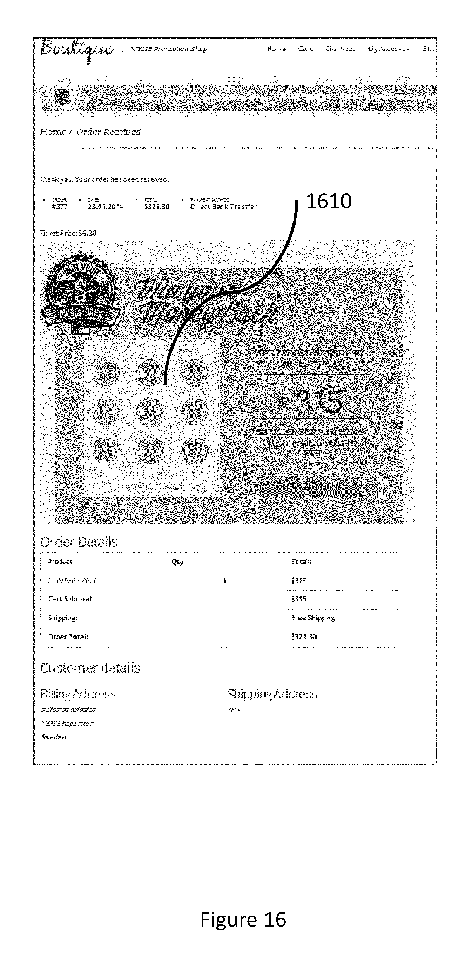

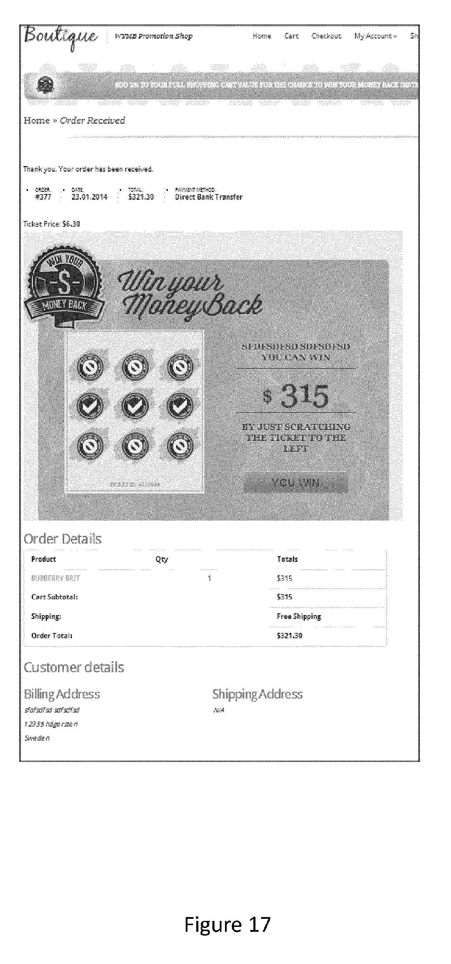

After completing indications of goods to purchase the user typically gives an indication to proceed to a cart. The second server presents content on a webpage that allows a user to provide user input data as user indications indicating a reward to purchase, shown in fig 14, 1410. The user may then provide a user indication 1420 as a user input signal to the second server that will send a request for delivery to the first server. The user may then optionally be offered to provide additional information, shown in fig 15. The first server will send a response for delivery comprising a third set of reward ticket data values, one in this example, to the second server. The second server then present said third set of reward ticket data values as an electronic game, a scratch card lottery ticket in this example, on an end-user device, shown in fig 16 1610.

## Claims

1. A method in a first server for secure and flexible providing of customer reward data, the method comprising:
generating a first set of reward ticket data values, wherein generating said first set further comprises determine each reward ticket data value as either a reward generating value or a non-reward generating value;
receiving a request for delivery of a third set of reward ticket data values from a second server, wherein said request for delivery of a third set of ticket data values comprises a second parameter set;
selecting said third set of reward ticket data values from a second set of instances of reward ticket data value bins based on said second parameter set;
sending a response for delivery to said second server, wherein said response for delivery is comprising said selected third set of ticket data values;

2. The method of claim 1, wherein said first server further comprises a customer reward data engine (CRDE) configured for secure and flexible providing of customer reward data, a pseudorandom number generator (PRNG) configured to generate a set of reward ticket data values and a customer reward database handler (CRDH) configured to save and retrieve data upon request from the CRDE;

3. The method of claim 1, wherein generating a first set of reward ticket data values further comprises:
obtaining a batch parameter set, wherein the batch parameter set comprises at least a batch id and a reward ticket data value count value;
obtaining a first set of reward ticket data values, wherein the request comprises said obtained batch parameter set;
saving said obtained first set of reward ticket data values;

4. The method of claim 3, wherein said batch parameter set is obtained via a request from a second server;

5. The method of claim 1, further comprising obtaining a predefined ordered second set of instances of reward ticket data value bins configured to comprise reward ticket data values and descriptive metadata, wherein obtaining a predefined ordered second set of instances of reward ticket data value bins further comprises:
obtaining a bin parameter set, wherein said bin parameter set comprises set of number of reward ticket data values per bin values;
generating a second set of instances of reward ticket data value bins based on said bin parameter set;
assigning descriptive metadata to the generated instances of reward ticket data value bins based on said bin parameter set;
saving said generated instances of reward ticket data value bins;

6. The method of claim 5, wherein said bin parameter set is obtained via a request from a second server;

7. The method of claim 1, further comprising assigning exclusive subsets of said first set of reward ticket data values to said second set of instances of reward ticket data value bins based on said descriptive metadata, wherein assigning further comprises:
selecting a subset of said first set of generated reward ticket data values based on the descriptive metadata of a first instance of said reward ticket data value bins;
assigning said selected subset to a first instance of said reward ticket data value bins and excluding said selected subset from said first set of generated reward ticket data values;
- repeatedly selecting a subset of said first set of generated reward ticket data values based on the descriptive metadata of a next instance of said reward ticket data value bins, assigning said selected subset to the next instance of said reward ticket data value bins and excluding said selected subset from said first set of generated ticket data values until all instances of reward ticket data value bins have been assigned ticket data values;

8. The method of claim 1, wherein receiving a request for delivery further comprises:
receiving a request for delivery of a third set of reward ticket data values from a second server;

9. The method of claim 1, wherein receiving a request for delivery further comprises:
receiving a request for delivery of a third set of reward ticket data values from a end-user device;

10. The method of claim 1, wherein selecting said third set of reward ticket data values further comprises:
determining a method to select the third set of reward ticket data values based on said second parameter set;
selecting said third set of reward ticket data values based on said determined method;

11. The method of claim 10, wherein said second parameter set comprises a transaction amount value and determining a method to select the third set of reward ticket data values is based on said transaction amount value, wherein the method is determined to be selecting a reward ticket data value from an instance of reward ticket data value bins where said transaction amount value is within a transaction amount value range comprised in the descriptive metadata.

12. The method of claim 10, wherein said second parameter set comprises a reward ticket data amount value and an operator id, wherein determining a method to select the third set of reward ticket data values is based on said reward ticket data amount value and an operator id, wherein the method is determined to be selecting a number of reward ticket data values equal to said reward ticket data amount value from instances of reward ticket data value bins where said operator id comprised in said second parameter set is equal to an operator id comprised in the descriptive metadata.

13. The method of claim 2, wherein generating a first set of reward ticket data values further comprises:
obtaining a batch parameter set by the CRDE via a request to the CRDH, wherein the batch parameter set comprises at least a batch id and a reward ticket data value count value;
obtaining a first set of reward ticket data values by the CRDE via a request to the PRNG, wherein the request comprises said obtained batch parameter set;
saving said obtained first set of reward ticket data values by the CRDE via a request to the CRDH;

14. The method of claim 13, wherein said batch parameter set is obtained via a request to the CRDH;

15. The method of claim 13, wherein said batch parameter set is obtained via a request from a second server;

16. The method of claim 2, further comprising obtaining a predefined ordered second set of instances of reward ticket data value bins configured to comprise reward ticket data values and descriptive metadata, wherein obtaining a predefined ordered second set of instances of reward ticket data value bins further comprises:
obtaining a bin parameter set by the CRDE, wherein said bin parameter set comprises set of number of reward ticket data values per bin values;
generating a second set of instances of reward ticket data value bins by the CRDE based on said bin parameter set;
assigning descriptive metadata to the generated instances of reward ticket data value bins based on said bin parameter set;
saving said generated instances of reward ticket data value bins by the CRDE via a request to the CRDH;

17. The method of claim 16, wherein said bin parameter set is obtained via a request to the CRDH;

18. The method of claim 16, wherein said bin parameter set is obtained via a request from a second server;

19. The method of claim 2, further comprising assigning exclusive subsets of said first set of reward ticket data values to said second set of instances of reward ticket data value bins based on said descriptive metadata, wherein assigning further comprises:
selecting a subset of said first set of generated reward ticket data values based on the descriptive metadata of a first instance of said reward ticket data value bins by the CRDE;
assigning said selected subset to a first instance of said reward ticket data value bins and excluding said selected subset from said first set of generated reward ticket data values by the CRDE;
- repeatedly selecting a subset of said first set of generated reward ticket data values based on the descriptive metadata of a next instance of said reward ticket data value bins, assigning said selected subset to the next instance of said reward ticket data value bins and excluding said selected subset from said first set of generated ticket data values until all instances of reward ticket data value bins have been assigned ticket data values by the CRDE;

20. The method of claim 2, wherein receiving a request for delivery further comprises:
receiving a request for delivery of a third set of reward ticket data values from a second server by the CRDE;

21. The method of claim 2, wherein receiving a request for delivery further comprises:
receiving a request for delivery of a third set of reward ticket data values from a end-user device by the CRDE;

22. The method of claim 2, wherein selecting said third set of reward ticket data values further comprises:
determining a method to select the third set of reward ticket data values based on said second parameter set by the CRDE;
selecting said third set of reward ticket data values by the CRDE based on said determined method;

23. The method of claim 22, wherein said second parameter set comprises a transaction amount value and determining a method to select the third set of reward ticket data values is based on said transaction amount value, wherein the method is determined to be selecting a reward ticket data value from an instance of reward ticket data value bins where said transaction amount value is within a transaction amount value range comprised in the descriptive metadata.

24. The method of claim 22, wherein said second parameter set comprises a reward ticket data amount value and an operator id, wherein determining a method to select the third set of reward ticket data values is based on said reward ticket data amount value and an operator id, wherein the method is determined to be selecting a number of reward ticket data values equal to said reward ticket data amount value from instances of reward ticket data value bins where said operator id comprised in said second parameter set is equal to an operator id comprised in the descriptive metadata.

25. A first server for secure and flexible providing of customer reward data, the first server comprising:
a processor/processing unit (310) provided with specifically designed programming or program code portions; and
a memory (330) configured to store data values or parameters received from a processor (310) or to retrieve and send data values or parameters to a processor 310; and
a communications interface (340) configured to send or receive data values or parameters to/from a processor (310) to/from external units via the communications interface 350;
wherein said processor/processing unit (310) is configured to perform the method steps of claims 1-13.

26. The server of claim 14, wherein said first server further comprises:
a customer reward data engine 360 (CRDE) configured for secure and flexible providing of customer reward data;
a pseudorandom number generator 370 (PRNG) configured to generate a set of reward ticket data values; and;
a customer reward database handler 380 (CRDH) configured to save and retrieve data upon request from the CRDE;

27. A computer program product comprising computer readable code configured to, when executed in a processor, perform any or all of the method steps of claims 1-13.

28. A non-transitory computer readable memory on which is stored computer readable code configured to, when executed in a processor, perform any or all of the method steps of claims 1-13.

29. A method in a second server of providing customer reward data, the method comprising:
sending a request for delivery of a third set of reward ticket data values to a first server, wherein said request for delivery of a third set of reward ticket data values comprises a second parameter set;
receiving a response for delivery from said first server, wherein said response for delivery is comprising a selected third set of reward ticket data values;

30. The method of claim 29, further comprising presenting said third set of reward ticket data values on an end-user device.

31. The method of claim 30, wherein presenting comprises presenting a game animation on the user device, such as a scratchcard, a slot machine, a poker game or an animation.

32. The method of claim 30, further comprising printing a hardcopy representation of said third set of reward ticket data values, such as a scratch card or a ticket.

33. A second server for secure and flexible providing of customer reward data, the first server comprising:
a processor/processing unit (410) provided with specifically designed programming or program code portions; and
a memory (430) configured to store data values or parameters received from a processor (410) or to retrieve and send data values or parameters to a processor 410; and
a communications interface (440) configured to send or receive data values or parameters to/from a processor (410) to/from external units via the communications interface 450;
wherein said processor/processing unit (410) is configured to perform the method steps of claims 29-31.

34. A computer program product comprising computer readable code configured to, when executed in a processor, perform any or all of the method steps of claims 29-31.

35. A non-transitory computer readable memory on which is stored computer readable code configured to, when executed in a processor, perform any or all of the method steps of claims 29-31.

36. A method in an end-user device of providing customer reward data, the method comprising:
receiving a user indication as a user input signal;
sending a request for delivery of a third set of reward ticket data values based on said user input signal;

37. A method in an end-user device for retrieving a provided customer reward data, the method comprising:
receiving an additional-information request identifying requested additional-information data;
sending an additional-information response, wherein said response additional-information data;

38. The method of claim 25, wherein the method further comprise sending a reward cash-in request, wherein said cash-in request comprises a reward ticket data value;

39. The method of claim 25, wherein said additional-information data comprises payment details, wherein the payment details comprises a bank account number with associated International Bank Account Number (IBAN) and Bank Identifier Code(BIC).

40. The method of claim 25, wherein said additional-information data comprises credit details, wherein the credit details comprises operator or provider of services or goods identity.

41. The method of claim 25, wherein said additional-information data comprises shipment address details , wherein the credit details comprises a selection of first name, last name, street, street number, zip code, city and country.

42. The method of claim 25, wherein said additional-information data comprises membership identity details or credit card details.

43. The method of claim 28, wherein the credit card details comprises a selection of card number, name, expiration date, card verification code (CVC)

44. The method of claim 28, wherein the membership identity details comprises a selection of membership number, card number, name, expiration date, card verification code (CVC)

45. An end-user device for secure and flexible providing of customer reward data, the first server comprising:
a processor/processing unit (510) provided with specifically designed programming or program code portions; and
a memory (530) configured to store data values or parameters received from a processor (510) or to retrieve and send data values or parameters to a processor 510; and
a communications interface (540) configured to send or receive data values or parameters to/from a processor (510) to/from external units via the communications interface 550;
wherein said processor/processing unit (410) is configured to perform the method steps of claims 37-44.

46. A computer program product comprising computer readable code configured to, when executed in a processor, perform any or all of the method steps of claims 37-44.

47. A non-transitory computer readable memory on which is stored computer readable code configured to, when executed in a processor, perform any or all of the method steps of claims 37-44.
